(19) Europäisches Patentamt
European Patent Office
Office européen des brevets

(11) Publication number: 0 220 765 B1

(12) **EUROPEAN PATENT SPECIFICATION**

(45) Date of publication of patent specification: **24.01.90**

(51) Int. Cl.$^5$: **C 08 G 75/22,** C 08 G 67/02

(21) Application number: **86201758.9**

(22) Date of filing: **13.10.86**

(54) **Novel copolymers of SO2 and ethene.**

(30) Priority: **15.10.85 NL 8502817**

(43) Date of publication of application:
**06.05.87 Bulletin 87/19**

(45) Publication of the grant of the patent:
**24.01.90 Bulletin 90/04**

(84) Designated Contracting States:
**BE CH DE FR GB IT LI NL**

(56) References cited:
**EP-A-0 121 965**
**FR-A-2 067 106**
**GB-A- 882 400**
**GB-A-2 045 782**
**GB-A-2 058 074**
**US-A-2 943 077**

**The file contains technical information submitted after the application was filed and not included in this specification**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Drent, Eit**
**Badhuisweg 3**
**NL-1031 CM Amsterdam (NL)**

(74) Representative: **Aalbers, Onno et al**
**P.O. Box 302**
**NL-2501 CH The Hague (NL)**

(56) References cited:
**CHEMICAL ABSTRACTS, vol. 69, 1968, page 6206, abstract no. 66570s, Columbus, Ohio, US; KLEIN et al.: "Palladium chloride-catalyzed reaction of ethylene and sulfur dioxide", & CHEM. COMMUN. 1968, (7), 377-8**

**EP 0 220 765 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to novel copolymers of sulphur dioxide with ethene and when appropriate also carbon monoxide and/or one or more other olefinically unsaturated hydrocarbons.

Copolymers of sulphur dioxide with ethene have been known for many years. They are commonly prepared by reacting the monomers in the presence of radial catalysts such as peroxides. Thus, branched polymers are obtained in which all monomer units occur distributed randomly within the polymer.

US—A—2 943 077 discloses a method to prepare by radical polymerisation copolymers of ethene and $SO_2$ containing high amounts of ethene. The pesence of an intermediate radical [ethene-$SO_2$] is stated. GB—A—2 045 782 refers to the radical polymerisation of ethene, $SO_2$ and CO. EP—A—121 965 discloses the preparation of polyketones using a bidentate ligand catalyst.

Recently, the Applicant found that high molecular weight linear copolymers of carbon monoxide with ethene, in which the monomer units occur in alternating order and which polymers therefore consist of units with the formula —CO—($C_2H_4$)—, can be prepared by using catalysts obtained by reacting a palladium, cobalt or nickel compound with an anion of an acid with a pKa of less than 2—provided that the acid is not a hydrohalogenic acid—and with a bidentate ligand with the general formula $R^1R^2$—M—R—M—$R^3R^4$, wherein M represents phosphorus, arsenic or antimony, $R^1$, $R^2$, $R^3$ and $R^4$ represent hydrocarbon groups and R represents a bivalent organic bridging group containing at least two carbon atoms in the bridge. For the sake of brevity, these catalysts will be referred to hereinafter as "BDL" (bidentate ligand) catalysts.

Further investigation into the application of the BDL catalysts has now shown that copolymers having an alternating structure are obtained when the carbon monoxide in the monomer mixture is partly or wholly replaced by sulphur dioxide. Thus, copolymers containing either exclusively $SO_2$ groups, or both $SO_2$ groups and CO groups, are prepared. The copolymers containing $SO_2$ groups are novel copolymers.

The present patent application therefore relates to novel copolymers of sulphur dioxide with ethene and, when appropriate, also with carbon monoxide and/or one or more other olefinically unsaturated hydrocarbons, having less than 20 carbon atoms (A), wherein

a) the copolymers have a linear configuration,

b) they consist of units with the formula —Z—($C_2H_4$)— and possibly also identical or unidentical units with the general formula —Z—(A)—, the units in the latter case occurring distributed randomly over the copolymer backbone, and

c) Z represents an $SO_2$ or a CO group, with the proviso that Z is an $SO_2$ group in at least part of the units.

This patent application further relates to the preparation of such polymers.

The units with the general formula —Z—(A)— which can be present in the copolymers of this invention can be identical or different from one another. The latter will apply if, for example, the polymers are prepared from a monomer mixture in which, besides sulphur dioxide and ethene, two or more other olefinically unsaturated hydrocarbons are present. For example, from a monomer mixture containing, in addition to sulphur dioxide and ethene, both propene and butene, polymers will be obtained which contain units with the formula —$SO_2$—($C_3H_6$)— as well as units with the formula —$SO_2$—($C_4H_8$)—. If in addition the monomer mixture contains carbon monoxide, then units with the formula —CO—($C_3H_6$)— and units with the formula —CO—($C_4H_8$)— will also be present in the polymers. But even if the mixture to be polymerized contains only one olefinically unsaturated hydrocarbon next to ethene, different units with the general formula —$SO_2$—(A)— may be present in the prepared polymer. In this case, the numbers of carbon and hydrogen atoms in the various units will be the same, but the structures will be different. For example, when using propene both units with the formula

$$—SO_2—CH(CH_3)—CH_2—$$

and units with the formula

$$—SO_2—CH_2—CH(CH_3)—$$

can be present in the prepared polymer. If in addition the monomer mixture contains carbon monoxide, units with the formula

$$—CO—CH(CH_3)—CH_2—$$

and units with the formula

$$—CO—CH_2—CH(CH_3)—$$

can also be present. When using olefins containing more carbon atoms than propene, such as butene, pentene or octene, there may, in addition to the structural differences as described for propene, also be structural differences as a result of isomerization. For example, when using 1-pentene, units with the following formulae can occur in the prepared polymer:

$$—SO_2—CH(C_3H_7)—CH_2—$$
$$—SO_2—CH_2—CH(C_3H_7)—$$
$$—SO_2—CH(CH_3)—CH(C_2H_5)—$$
$$—SO_2—CH(C_2H_5)—CH(CH_3)—.$$

Preferred copolymers are those prepared from a monomer mixture which, in addition to sulphur dioxide, ethene and contains no or only one other olefinically unsaturated hydrocarbon with less than 10 carbon atoms. The other olefinically unsaturated hydrocarbon is preferably propene.

Most preferred are ethene/$SO_2$ copolymers.

The olefinically unsaturated hydrocarbons (A) can be represented by the general formula $CHR_1=CHR_2$ where the groups $R_1$ and $R_2$ together contain less than 18 carbon atoms and where one of the groups $R_1$ and $R_2$ is a hydrocarbon group and the other is hydrogen or also a hydrocarbon group. In the latter case, $R_1$ and $R_2$ can together form part of a cyclic structure, such as in the monomers cyclopentene and cyclohexene. When the groups $R_1$ and $R_2$ are hydrocarbon groups, alkyl groups are preferred. Particularly preferred are monomers in which one of the groups $R_1$ and $R_2$ is hydrogen and the other is an alkyl group or more in particular a methyl group.

In the preparation of the polymers according to the invention use is preferably made of a BDL catalyst and in particular of a BDL catalyst obtained from a palladium compound as Group VIII metal compound. Very suitable for this purpose are palladium salts of carboxylic acids and in particular palladium acetate. Examples of suitable acids with a pKa of less than 2 (measured in aqueous solution at 18°C) are sulphonic acids such as methanesulphonic acid, trifluoromethanesulphonic acid and para-toluenesulphonic acid and carboxylic acids, such as trichloroacetic acid, difluoroacetic acid and trifluoroacetic acid. Preference is given to para-toluenesulphonic acid and trifluoroacetic acid.

In the preparation of the BDL catalysts the anion of the acid with a pKa of less than 2 is preferably present in the mixture to be reacted in a quantity of 0.5 to 200, and in particular of 1,0 to 100, equivalents per gram atom of Group VIII metal. In the bidentate ligand M is preferably phosphorus. The hydrocarbon groups $R^1$, $R^2$ and $R^3$ and $R^4$ preferably contain 6 to 14 carbon atoms. Particularly preferred are bidentate ligands in which the hydrocarbon groups $R^1$, $R^2$, $R^3$ and $R^4$ are phenyl groups or alkyl-substituted phenyl groups. The bivalent organic bridging group R preferably contains three carbon atoms in the bridge. Examples of suitable bidentate ligands are: 1,3-bis(di-p-tolylphosphino)propane, 1,3-bis(diphenylphosphino)propane and 2-methyl-2-(methyldiphenylphosphino)-1,3-bis(diphenylphosphino)propane. Preferably, one of the two last-mentioned bidentate ligands is used. In the mixture from which the BDL catalysts are prepared the bidentate ligand is preferably present in a quantity of 0.1—2 and in particular of 0.9—1.1, moles per mol Group VIII metal compound.

The polymerization is preferably carried out in a liquid diluting agent. Lower alcohols such as methanol and ethanol are very suitable as liquid diluting agents. The quantity of BDL catalyst employed in the preparation of the polymers according to the invention can vary within wide limits. Preferably, $10^{-7}$—$10^{-3}$, and more in particular $10^{-6}$—$10^{-4}$ mol of the BDL catalyst per mol of olefinically unsaturated hydrocarbon to be polymerized is employed. In the mixture to be polymerized, the molar ratio of the olefinically unsaturated hydrocarbons relative to the sum of sulphur dioxide and carbon monoxide, if present, is preferably 10:1—1:5 and in particular 5:1—1:2.

The invention will now be illustrated with the aid of the following example.

Example

A BDL catalyst was prepared as follows. To a solution of 3 mmol palladium acetate in 50 ml methanol were successively added with stirring 9 mmol of para-toluenesulphonic acid and 4.5 mmol of 1,3-bis(diphenylphosphino)propane. The precipitated BDL catalyst was filtered off, washed with methanol, and dried in vacuo at room temperature.

A sulphur dioxide/ethene copolymer was prepared as follows, using the BDL catalyst obtained in the above-described manner. 50 ml Methanol and 0.1 mmol BDL catalyst were introduced into a mechanically stirred autoclave of 250 ml capacity. The air present in the autoclave was substituted with sulphur dioxide by raising the pressure in the autoclave to 2 bar with sulphur dioxide and subsequently releasing the pressure. Subsequently, sulphur dioxide was introduced into the autoclave until a pressure of 3.5 bar was reached, followed by ethene, until a pressure of 30 bar was reached. Finally, the contents of the autoclave were heated to 120°C. After 5 hours the polymerization was stopped by lowering the temperature to room temperature and subsequently releasing the pressure. The polymer was filtered off, washed with methanol and dried in vacuo at room temperature. 1 g Copolymer with a melting point above 300°C was obtained. It was established by means of solid state $^{13}C$-NMR analysis that the copolymer had a linear alternating structure made up of units with the formula $—SO_2—(C_2H_4)—$.

**Claims**

1. Novel copolymers of sulphur dioxide with ethene and, optionally also carbon monoxide and/or one or more olefinically unsaturated hydrocarbons with less than 20 carbon atoms (A), which copolymers

a) have a linear structure,

b) consist of repeating units $—Z—(C_2H_4)—$ and optionally also of units —Z—(A), the latter occurring in random distribution over the copolymer chain, wherein Z represents an $SO_2$ or CO group with the proviso that at least part of the units Z are $SO_2$ groups.

2. Polymers as claimed in Claim 1, characterized in that the units with the general formula —Z—(A)— are derived from an olefinically unsaturated hydrocarbon with less than 10 carbon atoms.

3. A process for the preparation of copolymers as claimed in Claim 1 or 2, characterized in that a mixture of sulphur dioxide, ethene and, optionally also carbon monoxide and/or one or more olefinically unsaturated hydrocarbons with less than 20 carbon atoms is polymerized in the presence of a catalyst obtained by reaction of a palladium,

cobalt or nickel compound with an anion of an acid with a pKa of less than 2, with the proviso that the acid is not a hydrohalogenic acid, and with a bidentate ligand with the general formula

$$R^1R^2—M—R—M—R^3R^4,$$

wherein M represents phosphorus, arsenic or antimony, $R^1$, $R^2$, $R^3$ and $R^4$ represent hydrocarbon groups and R represents a bivalent organic bridging group containing at least two carbon atoms in the bridge.

4. A process as claimed in Claim 3, characterized in that, in addition to sulphur dioxide and ethene, propene is present in the monomer mixture.

5. A process as claimed in Claims 3 or 4, characterized in that the catalyst is obtained by reacting a palladium salt of a carboxylic acid.

6. A process as claimed in any one or more of Claims 3 to 5 characterized in that the catalyst has been obtained by reacting an anion of a sulphonic acid or of a carboxylic acid.

7. A process as claimed in Claim 6, characterized in that the catalyst has been obtained by reacting paratoluenesulphonic acid or trifluoroacetic acid.

8. A process as claimed in any one of Claims 3 to 7 characterized in that the catalyst has been obtained by reacting 1,3-bis(diphenylphosphino)propane or 2-methyl-2-(methyldiphenyl phosphino)-1,3-bis(diphenylphosphino)propane as bidentate ligand.

9. A process as claimed in any one of Claims 3 to 8, characterized in that in the mixture to be polymerized, the molar ratio of the olefinically unsaturated hydrocarbon (A) relative to the sum of sulphur dioxide and carbon monoxide, if present, is 10:1—1:5.

10. A process as claimed in Claim 9, characterized in that the polymerization is carried out at a temperature of 30—150°C and a pressure of 20—100 bar.

**Patentansprüche**

1. Neue Copolymere von Schwefeldioxid und Ethen und gegebenenfalls auch Kohlenmonoxid und/oder einen oder mehreren olefinisch ungesättigten Kohlenwasserstoffen weniger als 20 Kohlenstoffatomen (A)

a) mit linearer Struktur

b) bestehend aus wiederkehrenden Einheiten—$Z(C_2H_4)$—und gegebenenfalls auch Einheiten—Z—(A), letztere in regelloser Verteilung über die Copolymerkette, wobei Z eine $SO_2$— oder CO—Gruppe bedeutet, mit der Maßgabe, daß zumindest ein Teil der Einheiten Z $SO_2$-Gruppen sind.

2. Polymere nach Anspruch 1, dadurch gekennzeichnet, daß die Einheiten der allgemeinen Formel—Z—(A)—sich ableiten von einem olefinisch ungesättigten Kohlenwasserstoff mit weniger als 10 Kohlenstoffatomen.

3. Verfahren zur Herstellung der Copolymeren nach Anspruch 1 oder 2, dadurch gekennzeichnet, daß ein Gemisch von Schwefeldioxid, Ethen und gegebenenfalls auch Kohlenmonoxid und/oder einem oder mehreren olefinisch ungesättigten Kohlenwasserstoffen mit weniger als 20 Kohlenstoffatomen in Gegenwart eines Katalysators polymerisiert wird, der erhalten worden ist durch Umsetzung einer Palladium-, Cobalt- oder Nickelverbindung mit einem Anion einer Säure, deren pKa <2 ist, mit der Maß gabe, daß die Säure nicht eine Halogenwasserstoffsäure ist, und mit einem zweizähnigen Liganden der allgemeinen Formel

$$R^1R^2—M—R—M—R^3R^4,$$

worin M Phosphor, Arsen oder Antimon ist und $R^1$, $R^2$, $R^3$ und $R^4$ Kohlenstoffgruppen sind und R eine zweiwertige organische Brückengruppe, enthaltend zumindest 2 Kohlenstoffatome in der Brücke, ist.

4. Verfahren nach Anspruch 3, dadurch gekennzeichnet, daß zusätzlich zu Schwefeldioxid und Ethen, Propen in dem Monomergemisch vorhanden ist.

5. Verfahren nach Anspruch 3 oder 4, dadurch gekennzeichnet, daß der Katalysator erhalten worden ist durch Umsetzung eines Palladiumsalzes einer Carbonsäure.

6. Verfahren nach einem der vorhergehenden Ansprüche 3 bis 5, dadurch gekennzeichnet, daß der Katalysator erhalten worden ist durch Umsetzung eines Anions einer Schwefelsäure oder einer Carbonsäure.

7. Verfahren nach Anspruch 6, dadurch gekennzeichnet, daß der Katalysator erhalten worden ist durch Umsetzung von Paratoluolsulfonsäure oder Trifluoressigsäure.

8. Verfahren nach einem der Ansprüche 3 bis 7, dadurch gekennzeichnet, daß der Katalysator erhalten worden ist durch Umsetzung von 1,3-bis(Diphenylphosphin)propan oder 2-Methyl-2-(methyldiphenyl-phosphin)-1,3-bis(diphenylphosphin)propan als zweizähniger Ligand.

9. Verfahren nach einem der Ansprüche 3 bis 8, dadurch gekennzeichnet, daß in dem zu polymerisierenden Gemisch das Molverhältnis der olefinisch ungesättigten Kohlenwasserstoffe (A) zu der Summe von Schwefeldioxid und gegebenenfalls Kohlenmonoxid 10:1—1:5 beträgt.

10. Verfahren nach Anspruch 9, dadurch gekennzeichnet, daß die Polymerisation bei einer Temperatur von 30 bis 150°C unter einem Druck von 20 bis 100 bar durchgeführt wird.

**Revendications**

1. Nouveaux copolymères de dioxyde de soufre et d'éthylène et, éventuellement, également du monoxyde de carbone et/ou un ou plus d'un hydrocarbure oléfiniquement insaturé, avec moins de 20 atomes de carbone (A), lesquels polymères:

a) présentent une structure linéaire,

b) sont constitués de motifs —Z—$(C_2H_4)$— et éventuellement de motifs —Z—(A), ces derniers

se trouvant distribués de façon aléatoire sur la chaîne du copolymère, dans lesquels Z représente un groupe $SO_2$ ou CO pourvu qu'au moins une partie des motifs Z soit des groupes $SO_2$.

2. Polymères tels que revendiqués dans la revendication 1, caractérisés en ce que les motifs présentant la formule générale —Z—(A)— sont dérivés d'un hydrocarbure oléfiniquement insaturé qui présente moins de 10 atomes de carbone.

3. Un procédé pour la préparation de copolymères tels que revendiqués dans la revendication 1 ou 2, caractérisé en ce qu'un mélange de dioxyde de soufre, d'éthylène et, éventuellement, également de monoxyde de carbone et/ou d'un ou de plus d'un hydrocarbure oléfiniquement insaturé présentant moins de 20 atomes atomes de carbone, est polymérisé en présence d'un catalyseur obtenue par réaction d'un composé du palladium, du cobalt ou du nickel avec un anion d'un acide présentant un pKa inférieure à 2, pourvu que l'acide ne soit pas un acide hydrohalogéné, et avec un ligand bidenté présentant la formule générale

$$R^1R^2—M—R—M—R^3R^4,$$

dans laquelle M représente du phosphore, de l'arsenic ou de l'antimoine, $R^1$, $R^2$, $R^3$ et $R^4$ représentent des groupes hydrocarbures et R représente un groupe bivalent de pontage organique renfermant au moins deux atomes de carbone sur le pont.

4. Un procédé tel que revendiqué dans la revendication 3, caractérisé en ce que, outre le dioxyde de soufre et l'éthylène du propylène est présent dans le mélange de monomère.

5. Un procédé tel que revendiqué dans les revendications 3 ou 4, caractérisé en ce que le catalyseur est obtenu en faisant réagir un sel de palladium d'un acide carboxylique.

6. Un procédé tel que revendiqué dans l'une quelconque ou plus d'un des revendications 3 à 5, caractérisé en ce que le catalyseur a été obtenu en faisant réagir un anion d'un acide sulfonique ou d'un acide carboxylique.

7. Un procédé tel que revendiqué dans la revendication 6, caractérisé en ce que le catalyseur a été obtenu en faisant réagir un acide paratoluènesulfonique ou un acide trifluoroacétique.

8. Un procédé tel que revendiqué dans l'une quelconque des revendications 3 à 7, caractérisé en ce que les catalyseurs ont été obtenus en faisant réagir le 1,3-bis(diphénylphosphino)propane ou le 2-méthyl-2-(méthyldiphényl phosphino)-1,3-bis(diphénylphosphino)propane comme ligand bidenté.

9. Un procédé tel que revendiqué dans l'une quelconque des revendications 3 à 8, caractérisé en ce que, dans le mélange à polymèriser, le rapport de l'hydrocarbure oléfiniquement insaturé (A) à la somme du dioxyde de soufre et du monoxyde de carbone, s'il est présent, est de 10:1 à 1:5.

10. Un procédé tel que revendiqué dans la revendication 9, caractérisé en ce que la polymérisation est réalisée à une température de 30—150°C et sous une pression de 20—100 bars.